(19) **Europäisches Patentamt**
**European Patent Office**
**Office européen des brevets**

(11) **EP 1 919 075 A2**

(12) **EUROPÄISCHE PATENTANMELDUNG**

(43) Veröffentlichungstag:
**07.05.2008 Patentblatt 2008/19**

(51) Int Cl.:
***H02P 6/18*** *(2006.01)*

(21) Anmeldenummer: **07119480.7**

(22) Anmeldetag: **29.10.2007**

(84) Benannte Vertragsstaaten:
**AT BE BG CH CY CZ DE DK EE ES FI FR GB GR
HU IE IS IT LI LT LU LV MC MT NL PL PT RO SE
SI SK TR**
Benannte Erstreckungsstaaten:
**AL BA HR MK RS**

(30) Priorität: **31.10.2006 DE 102006051499**

(71) Anmelder: **Kaltenbach & Voigt GmbH
88400 Biberach (DE)**

(72) Erfinder:
• **Bürk, Richard**
 **88433 Alberweiler (DE)**
• **Sauter, Johannes**
 **88416 Mittelbuch (DE)**

(74) Vertreter: **Thun, Clemens**
 **Mitscherlich & Partner
 Sonnenstrasse 33
 80331 München (DE)**

(54) **Verfahren und Schaltungsanordnung zum Betreiben eines bürstenlosen Elektromotors**

(57) Bei einem Verfahren zum Betreiben eines beispielsweise zum Antreiben eines zahnärztlichen Behandlungsinstruments (140) vorgesehen bürstenlosen Elektromotors (10) mit einem Permanentmagnetrotor (11) sowie einem Stator (14) mit drei elektrisch um 120° versetzten Wicklungen (15), werden die Nulldurchgänge einer durch die Drehung des Rotors (11) in die Statorwicklungen (15) induzierten Spannung ($U_{EMK}$) durch einen Vergleich der in einer Überwachungsphase an einer inaktiven Statorwicklung (15) anliegenden Spannung mit einer Vergleichsspannung ($U_{Vergleich}$) erfasst und auf Basis der erfassten Nulldurchgänge die Drehzahl des Motors (10) und/oder ein geeigneter Kommutierungszeitpunkt für eine den Statorwicklungen (15) zugeführte Zwischenkreisspannung ($U_{ZK}$) ermittelt. Die Vergleichsspannung ($U_{Vergleich}$) wird durch die in der Überwachungsphase an den beiden weiteren, aktiven Statorwicklungen (15) anliegenden Spannungen gebildet.

Fig. 2

**Beschreibung**

Die vorliegende Erfindung betrifft ein Verfahren sowie eine Schaltungsanordnung zum Betreiben eines bürstenlosen Elektromotors, der einen Pennanentmagnetrotor sowie einen Stator mit drei elektrisch um 120° versetzten Wicklungssträngen aufweist. Insbesondere betrifft die vorliegende Erfindung einen Elektromotor zum Antreiben eines zahnärztlichen Behandlungsinstruments, beispielsweise eines Bohrhandstücks, oder eines dentaltechnischen Instruments.

Zahnärztliche oder dentaltechnische Handinstrumente weisen üblicherweise Behandluligswerkzeuge auf, welche mit Hilfe eines Antriebs in Schwingungen oder Rotation versetzt werden. Insbesondere bei zahnärztlichen Behandlungsinstrumenten besteht hierbei die Möglichkeit, den Antrieb in Form eines Luftmotors beziehungsweise einer Turbine zu gestalten oder einen Elektromotor zu verwenden. Zwar sind Turbinen üblicherweise kostengünstiger und Platz sparender, allerdings weist ein Elektromotor hinsichtlich seiner Betriebseigenschaften gewisse Vorteile auf. So bietet ein Elektroantrieb beispielsweise die Möglichkeit, die Drehzahl des Behandlungswerkzeugs sowie das von dem Behandlungswerkzeug ausgeübte Drehmoment zu variieren. Hierdurch kann das Behandlungsinstrument flexibler eingesetzt werden. Ferner können Behandlungen mit höherer Präzision durchgeführt werden.

Als geeignete Motoren zum Einsatz in zahnärztlichen Behandlungsinstrumenten haben sich in der Vergangenheit insbesondere so genannte bürstenlose Motoren herausgestellt. Es handelt sich hierbei um Motoren mit einem permanentmagnetischen Rotor, der von einem Stator mit mehreren Wicklungen umgeben ist. Üblicherweise weist der Stator drei elektrisch um 120° versetzte Wicklungsstränge auf, denen abhängig von der Lage des Rotors eine Versorgungsspannung zugeführt wird. Durch entsprechendes Umschalten - das sog. Kommutieren - der Versorgungsspannung für die Statorwicklungen wird der Rotor durch das hierbei entstehende sich drehende Magnetfeld in Rotation versetzt.

Derartige bürstenlose Elektromotoren, die oftmals auch als BLDC (brushless direct current) Motoren bezeichnet werden, zeichnen sich unter anderem durch ihren hohen Leistungsgrad aus. Hierfür ist allerdings Voraussetzung, dass das Kommutieren der Versorgungsspannung für die Statorwicklungen synchron mit der Drehung des Rotors erfolgt. Es ist also eine Ermittlung der Winkelstellung des Rotors erforderlich, was beispielsweise durch den Einsatz entsprechender Sensoren, insbesondere von so genannten Hall-Sensoren erfolgen könnte. Da hierzu allerdings zusätzliche Bauelemente erforderlich wären, wird zwischenzeitlich die Rotorlage auch über die durch den Rotor in die Statorwicklungen induzierte Spannung, die so genannte elektromotorische Kraft (EMK) ermittelt. Diese Spannung hängt für die einzelnen Wicklungen jeweils von der Lage des bzw. der Magnete des Rotors zu dem entsprechenden Wicklungsstrang ab, wobei insbesondere der Zeitpunkt, zu dem die in eine Wicklung induzierte Spannung gleich Null ist, eine besondere Position des Rotors kennzeichnet, welche für die Ableitung eines geeigneten Kommutierungszeitpunkts herangezogen wird. So wird beispielsweise die Kommutierung üblicherweise zu einem Zeitpunkt vorgenommen, zu dem sich der Rotor nach Durchlaufen des Spannungsnulldurchgangs um weitere etwa 30° gedreht hat. Durch das Überwachen der EMK kann also die Kommutierung der Versorgungsspannung in geeigneter Weise an die Rotordrehung angepasst werden. Ferner kann auf diesem Wege auch die Drehzahl des Motors ermittelt werden.

Figur 5 zeigt eine aus dem Stand der Technik bekannte Schaltungsanordnung, welche bislang zur Erkennung der EMK-Spannungsnulldurchgänge für einen bürstenlosen Motor eingesetzt wurde. Grundsätzlich wurde bei dieser Vorgehensweise bislang entweder ein künstlicher so genannter Sternpunkt generiert und die zu untersuchende stromlose Phase gegen diesen künstlichen Sternpunkt verglichen. Alternativ hierzu konnte auch der Sternpunkt des Motors herausgeführt und direkt einem Komparator zugeführt werden.

Figur 5 zeigt eine Lösung gemäß der ersten Variante, wie sie beispielsweise aus der DE 100 23 370 A1 bekannt ist und bei der die an den drei Wicklungssträngen der Statorwicklungen anliegenden Spannungen der Phasen U, V und W einerseits jeweils über drei Widerstände R1, R2 und R3 den (positiven) Eingängen dreier Komparatoren IC1, IC2 und IC3 zugeführt und andererseits über drei Widerstände R4, R5 und R6 zu einem gemeinsamen Sternpunkt S zusammengeführt werden. Am jeweils zweiten Eingang der Kompatoren IC1 bis IC3 liegt dann ferner die sich im Sternpunkt S ergebende Sternpunktspannung an.

Die drei sog. Sternpunktwiderstände R4 bis R6 weisen bei dieser bekannten Schaltungsanordnung den gleichen Widerstandswert auf, was zur Folge hat, dass die Sternpunktspannung sich wie folgt berechnet:

$$U_{Sternpunkt} \approx \frac{1}{3} U_{EMK,PhaseNN} + \frac{1}{2} U_{ZK}$$

Hierbei entspricht $U_{EMK,PhaseNN}$ der Generatorspannung des Motors an der jeweils aktuell untersuchten Phase (U, V oder W). $U_{ZK}$ entspricht der Zwischenkreisspannung, mit der die Statorwicklungen bestromt werden, während hingegen $U_{sternpunkt}$ der Spannung am künstlichen Sternpunkt S entspricht.

Der jeweils aktive Komparator IC1 , IC2 bzw. IC3 errechnet dann die Differenzspannung

$$\Delta U = U_{EMK,PhaseNN} - U_{Sternpunkt}$$

bzw.

$$\Delta U = U_{EMK,PhaseNN} - \frac{1}{3}U_{EMK,PhaseNN} - \frac{1}{2}U_{ZK}$$

und schaltet, wenn die Spannungsdifferenz eine bestimmte Hysteresespannung überschreitet. Der auf diesem Wege erkannte Spannungsnulldurchgang gibt Auskunft über die Lage sowie die Drehzahl des Rotors.

Diese bekannte Schaltungsanordnung gemäß Figur 5 hat sich in der Praxis bewährt und funktioniert insbesondere dann ohne Probleme, wenn die Zwischenkreisspannung stabil ist und nicht über eine Pulsweitenmodulation zerhackt wird. Es darf also keine getaktete Endstufe für den Motor eingesetzt werden, sondern es ist stattdessen ein geregelter Zwischenkreis erforderlich.

Wird allerdings die Motordrehzahl geregelt, indem die Motorspannung durch Takten der Endstufe, also eine Pulsweitenmodulation erzeugt wird, so führt dies bei der aus dem Stand der Technik bekannten Schaltungsanordnung schnell zu Störungen und damit zu einer fehlerhaften Kommutierung des Motors. Der Grund hierfür ist, dass falsche Spannungsnulldurchgänge erkannt werden, welche sich durch Spannungsspitzen ergeben, die durch die Pulsweitenmodulation erzeugt werden und ein falsches Schalten der Komparatoren zur Folge haben. Ein weiteres Problem der bekannten Schaltungsanordnung gemäß Figur 5 besteht darin, dass diese bei Unterschreiten einer bestimmten Mindestdrehzahl des Motors keine brauchbaren Ergebnisse mehr liefert, da die hierbei erhaltenen Signale zu schwach sind, um eindeutig einen Spannungsnulldurchgang zu erkennen.

Der vorliegenden Erfindung liegt dementsprechend die Aufgabe zugrunde, eine neue Schaltungsanordnung anzugeben, mit deren Hilfe Spannungsnulldurchgänge weiterhin eindeutig zu erkennen sind, auch für den Fall, dass eine getaktete Endstufe zur Drehzahlregelung beziehungsweise Drehzahlsteuerung des Motors verwendet wird. Ferner soll die Schaltungsanordnung bei reiner Blockkommutierung mit einem geregelten Zwischenkreis auch bei niedrigeren Drehzahlen noch ein eindeutiges Nulldurchgangssignal liefern, so dass der in diesem Fall nutzbare Drehzahlbereich nach unten erweitert werden kann.

Die Aufgabe wird durch ein Verfahren zum Betreiben eines bürstenlosen Elektromotors mit den Merkmalen des Anspruchs 1 gelöst. Ferner wird die Aufgabe durch eine Schaltungsanordnung gemäß Anspruch 8 gelöst. Vorteilhafte Weiterbildungen der Erfindung sind Gegenstand der Unteransprüche.

Die erfindungsgemäße Lösung beruht auf der Idee, den Signalabstand beziehungsweise Schaltabstand für die Komparatoren zu erhöhen, indem statt des künstlichen Sternpunkts eine spezielle Vergleichsspannung aus den beiden aktiven Phasen der Statorwicklung generiert und diese mit der zu untersuchenden Phase verglichen wird. Diese Maßnahme führt dazu, dass eine eindeutiges Nulldurchgangssignal auch bei Störungen, die durch eine Pulsweitenmodulation hervorgerufen werden könnten, oder bei kleineren Signalen, die bei niedrigeren Drehzahlen vorliegen, erhalten werden kann.

Erfindungsgemäß wird dementsprechend ein Verfahren zum Betreiben eines beispielsweise zum Antreiben eines zahnärztlichen Behandlungsinstruments vorgesehen bürstenlosen Elektromotors mit einem Permanentmagnetrotor sowie einem Stator mit drei elektrisch um 120° versetzten Wicklungen vorgeschlagen, wobei die Nulldurchgänge einer durch die Drehung des Rotors in die Statorvicklungen induzierten Spannung durch einen Vergleich der in einer Überwachungsphase an einer inaktiven Statorwicklung anliegenden Spannung mit einer Vergleichsspannung erfasst werden und auf Basis der erfassten Nulldurchgänge die Drehzahl des Motors und/oder ein geeigneter Kommutierungszeitpunkt für eine den Statorwicklungen zugeführte Zwischenkreisspannung ermittelt wird. Erfindungsgemäß ist vorgesehen, dass die Vergleichsspannung durch die in der Überwachungsphase an den beiden weiteren, aktiven Statorwicklungen anliegenden Spannungen gebildet wird.

Gemäß einem weitem Aspekt der vorliegenden Erfindung wird eine Schaltungsanordnung zum Erfassen der Nulldurchgänge einer in einem bürstenlosen Elektromotor mit einem Permanentmagnetrotor sowie einem Stator mit drei elektrisch um 120° versetzten Wicklungen in die Statorwicklungen durch die Drehung des Rotors induzierten Spannung vorgeschlagen, mit einer Vergleichseinrichtung zum Vergleichen einer in einer Überwachungsphase an einer inaktiven Statorwicklung anliegenden Spannung mit einer Vergleichsspannung, wobei erfindungsgemäß die Vergleichsspannung aus den beiden in der Überwachungsphase an den beiden weiteren, aktiven Statorwicklungen anliegenden Spannungen abgeleitet ist.

Die in den abhängigen Ansprüchen angegebenen Weiterbildungen der Erfindung betreffen insbesondere Maßnahmen, durch die der Aufbau der Schaltungsanordnung sowie die Genauigkeit bei der Erkennung des Nulldurchgangs weiter verbessert wird.

Vorzugsweise ist die Einrichtung zum Vergleichen der induzierten Spannung mit der Vergleichsspannung durch einen Komparator gebildet, wobei beide Eingänge des Komparators dann über einen Koppelkondensator überbrückt sein können, mit dessen Hilfe Spannungsspitzen gefiltert werden. Ferner kann vorgesehen sein, dass für jede Statorwicklung ein separater Komparator vorgesehen ist, wobei dann die entsprechenden Eingänge für die Komparatoren jeweils identisch ausgebildet sind. Die Wicklungsstränge können hierbei jeweils über entsprechende Widerstände mit dem Komparator verbunden sein.

Eine andere Weiterbildung der erfindungsgemäßen Schaltungsanordnung besteht darin, dass die Eingangssignale für den Komparator zunächst über einen Spannungsteiler herabgesetzt werden, um die Spannungen in einen Arbeitsbereich des bzw. der Komparatoren zu übertragen. Alternativ hierzu könnten auch die Spannungen mittels Klemmdioden an den Eingängen des Komparators auf zulässige Werte begrenzt werden.

In jedem Fall ist durch die vorliegende Erfindung sichergestellt, dass Spannungsnulldurchgänge der in die Statorwicklungen induzierten EMK sicher und zuverlässig erfasst werden können. Hierdurch ist gewährleistet, dass der Motor mit einem hohen Wirkungsgrad betrieben und die Drehzahl sicher eingestellt werden kann.

Nachfolgend soll die Erfindung anhand der beiliegenden Zeichnungen näher erläutert werden. Es zeigen:

Figur 1    die Ansicht eines zahnärztlichen Behandlungsinstruments, bei dem ein bürstenloser Elektromotor mit einer erfindungsgemäß ausgestalteten Schaltungsanordnung zum Einsatz kommt;

Figur 2    schematisch den Aufbau einer Steuerschaltung zum Betreiben des bürstenlosen Elektromotors;

Figur 3a    ein erstes Ausführungsbeispiel einer erfindungsgemäßen Schaltungsanordnung zum Erkennen von Spannungsnulldurchgängen;

Figur 3b    eine Variante der Schaltungsanordnung von Figur 3a;

Figur 4a    ein zweites Ausführungsbeispiel einer erfindungsgemäßen Schaltungsanordnung;

Figur 4b    eine Variante der Schaltungsanordnung von Figur 4a und

Figur 5    den Aufbau einer entsprechenden Schaltungsanordnung zum Erkennen von Spannungsnulldurchgängen gemäß dem Stand der Technik.

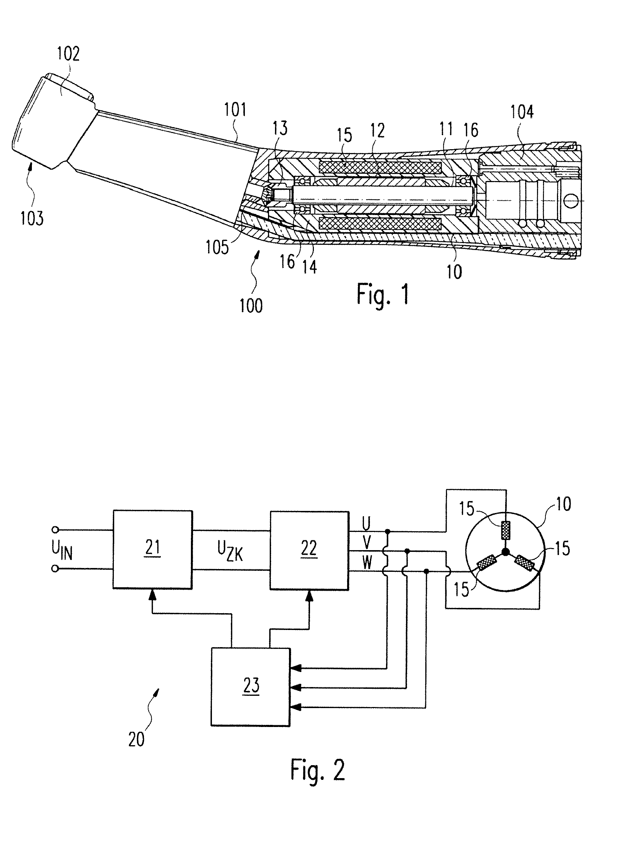

Figur 1 zeigt als mögliches Anwendungsbeispiel für die vorliegende Erfindung ein allgemein mit dem Bezugzeichen 100 versehenes zahnärztliches Handstück, welches eine längliche, im vorderen Endbereich leicht gebogene beziehungsweise abgewinkelte Griffhülse 101 aufweist. Am vorderen Ende der Griffhülse 101 ist ein Kopfbereich 102 angeordnet, der eine Werkzeugaufnahme 103 zur Aufnahme eines drehbar gelagerten Werkzeugs, beispielsweise eines zahnärztlichen Bohrers aufweist. Zu Behandlungszwecken wird der in die Werkzeugaufnahme 103 aufgenommene Bohrer in Rotation versetzt, was mit Hilfe eines Motors 10 erfolgt, der im rückwärtigen Bereich der Griffhülse angeordnet ist. Es handelt sich hierbei um einen Elektromotor, der über einen - nicht dargestellten - Versorgungsschlauch von einer zahnärztlichen Versorgungseinrichtung mit Strom versorgt wird. Hierzu ist am hinteren Ende der Griffhülse 101 des Handstück 100 ein Kupplungselement 104 vorgesehen, mit dessen Hilfe das Handstück 100 an den Versorgungsschlauch angeschlossen werden kann.

Bei dem Motor 10 handelt es sich um einen so genannten bürstenlosen Elektromotor. Er weist im Wesentlichen einen einen oder mehrere Permanentmagnete 12 aufweisenden Rotor 11 sowie einen den Rotor 11 umgebenden Stator 14 auf. Der Stator 14 wiederum weist mehrere Statorwicklungen 15 auf, die - wie nachfolgend noch näher beschrieben wird - alternierend mit einer Versorgungsspannung versorgt werden. Durch das alternierende Ansteuern der Statorwicklungen 15 wird ein sich zeitlich veränderndes Magnetfeld erzeugt, welches mit dem bzw. den Permanentmagneten 12 des Rotors 11 derart zusammen wirkt, dass sich dieser dreht. Hierzu ist der Rotor 11 mittels zweier Lager 16 innerhalb des Stators 14 drehbar angeordnet. Am vorderen Ende des Rotors befindet sich ferner ein Zahnrad 13, welches mit einem entsprechenden Gegenstück 105 einer Antriebswelle zusammenwirkt, über die dann letztendlich die Rotation des Rotors 12 auf die Werkzeugaufnahme 103 übertragen wird.

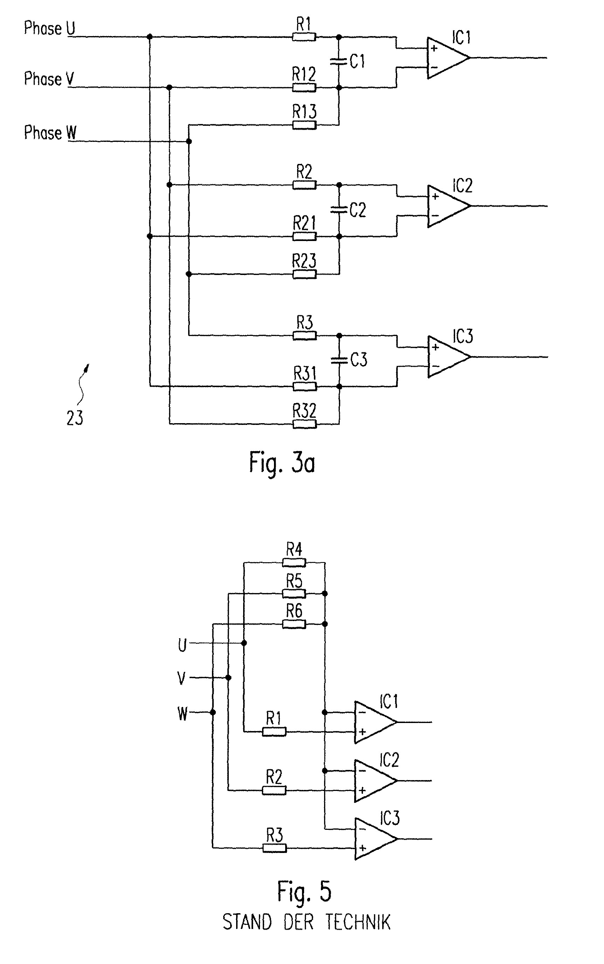

Derartige bürstenlose Motoren zeichnen sich durch ihre kompakte Bauweise und ihren hohen Wirkungsgrad aus. Voraussetzung hierfür ist allerdings, dass die Statorwicklungen des Stators in geeigneter Weise beziehungsweise zu den geeigneten Zeitpunkten mit Spannung versorgt werden. Ein Beispiel einer hiefür ausgebildeten Steuerschaltung ist schematisch in Figur 2 dargestellt.

Diese allgemein mit dem Bezugszeichen 20 versehene Schaltung weist im dargestellten Beispiel eingangsseitig einen Zwischenkreisregler 21 auf, über den die Versorgungsspannung $U_{IN}$ für den Motor auf einen bestimmten Wert geregelt wird. Diese Zwischenkreisspannung $U_{ZK}$ wird dann einem Wechselrichter 22 zugeführt, der in Abhängigkeit von dem Eingangssignal einer Steuer- und Regeleinheit 23 die drei Statorwicklungen des Motors 10 mit Spannung versorgt. Anzumerken ist, dass Figur 2 eine möglich Konfiguration für die Steuerschaltung zeigt. Alternativ zu dem Zwischenkreisreger 21 könnte die Schaltungsanordnung 20 eingangsseitig beispielsweise auch einen einfachen Gleichrichter oder eine DC-Spannungsquelle aufweisen.

Wichtig für die Spannungsversorgung der Statorwicklungen 15 durch den Wechselrichter 22 ist, dass die Zeitpunkte, zu denen zwischen den einzelnen Phasen U,V,W gewechselt wird, auf die Rotorlage abgestimmt sind. Die Winkelstellung des Rotors wird nunmehr ohne den Einsatz zusätzlicher Sensoren sondern über die durch den Rotor in die Wicklungen induzierte Spannung erkannt. Hierbei wird die Tatsache ausgenutzt, dass der bzw. die sich drehenden Permanentmagnete des Rotors eine Spannung in die Statorwicklungen induzieren, wobei der Verlauf dieser induzierten Spannung (EMK) Auskunft über die Lage des Rotors gibt.

Genau genommen besteht die Aufgabe darin, zu erkennen, zu welchen Zeitpunkten die in die jeweiligen Statorwicklungen induzierte Spannung gleich Null ist bzw. ihr Vorzeichen wechselt. Hierzu weist die Steuerund Regelschaltung 23 eingangsseitig eine erfindungsgemäß ausgestaltete Schaltungsanordnung zur Nulldurchgangserkennung auf, wie sie in Figur 3a dargestellt ist und nachfolgend näher erläutert werden soll.

Wie auch bei der bekannten Schaltungsanordnung gemäß dem Stand der Technik in Figur 5 - gleiche Bauteile sind in den Darstellungen mit den gleichen Bezugszeichen versehen - ist vorgesehen, dass für jede Statorwicklung einzeln erfasst wird, zu welchem Zeitpunkt die in den entsprechenden Wicklungsstrang induzierte Spannung gleich Null ist. Dementsprechend sind für jede Phase U, V, W jeweils ein Komparator IC1, IC2, IC3 vorgesehen, wobei diesem Komparator zunächst über einen Widerstand R1, R2 beziehungsweise R3 die entsprechende Spannung der Phase U, V, W, übermittelt wird. Dieses erste Eingangssignal wird nun mit einer Vergleichsspannung verglichen, welche aus den Spannungen, die an den beiden weiteren Statorwicklungen anliegen, abgeleitet ist. Für den ersten Komparator IC1 bedeutet dies beispielsweise, dass die Vergleichsspannung für die Phase U dadurch gebildet ist, dass an die Wicklungsstränge der Phasen V und W jeweils zwei weitere Widerstände R12 und R13 angeschlossen sind, wobei deren gemeinsamer Ausgang bzw. Knotenpunkt dann das Vergleichssignal für den Komparator IC1 bildet. Die Vergleichsspannung wird also mit Hilfe eines Spannungsteilers erzeugt, der durch die beiden Widerstände R12 und R13 gebildet ist. Beide Eingänge des Komparators IC1 werden hierbei über einen Kondensator C1 überbrückt, dessen Aufgabe es ist, kapazitiv oder induktiv angekoppelte Spannungsspitzen zu filtern.

In gleicher Weise werden auch die Vergleichsspannungen zur Nulldurchgangserkennung für die beiden weiteren Phasen V und W gebildet. An den negativen Eingang des Komparators IC2 sind dementsprechend die beiden Phasen U und W über jeweils einen Widerstand R21 beziehungsweise R23 angeschlossen, während hingegen die Vergleichsspannung für den dritten Komparator IC3 am Knotenpunkt der Ausgänge der beiden Phasen U und V mit den Widerständen R31 und R32 gebildet ist. Auch die beiden weiteren Komparatoren IC2 und IC3 sind jeweils über Kondensatoren C2 und C3 überbrückt.

Die Widerstandswerte für die Widerstände, mit deren Hilfe die Vergleichsspannung generiert wird, sind vorzugsweise jeweils gleich hoch und ferner vorzugsweise doppelt so groß wie die Widerstände, über die die zu untersuchende Spannung an den Komparator übermittelt wird. Es gilt also vorzugsweise:

$$R12 = R13$$

$$R21 = R23$$

$$R31 = R32$$

und ferner:

$$R1 = 1/2\, R12$$

$$R2 = 1/2\, R21$$

$$R3 = 1/2\, R31$$

In diesem Fall ergibt sich für die Vergleichsspannung(en) bei aktiver PWM-Phase folgender Wert:

$$U_{Vergleich} \approx \frac{1}{2} U_{ZK}$$

Der Komparator IC1, IC2 bzw. IC3 vergleicht dann die Spannung der zu untersuchenden inaktiven Phase gegen die durch die beiden aktiven Phasen gebildete Vergleichsspannung und schaltet, sobald die Spannungsdifferenz eine bestimmte Hysteresespannung überschreitet.

Für die Spannungsdifferenz gilt nunmehr:

$$\Delta U = U_{EMK,PhaseNN} - U_{Vergleich}$$

bzw.

$$\Delta U = U_{EMK,PhaseNN} - \frac{1}{2} U_{ZK}$$

Wie leicht zu erkennen ist, ist also die Differenzspannung $\Delta U$ bei dem erfindungsgemäßen Ausführungsbeispiel um ein Drittel der elektromotorischen Kraft

$U_{EMK}$ größer als bei der bekannten Schaltungsanordnung gemäß Figur 5. Dies bedeutet, dass ein wesentlich besserer Signalabstand erzielt wird, wodurch Fehlerkennungen der Nulldurchgänge vermieden werden können. Ferner ist das Differenzsignal auch bei niedrigeren Drehzahlen ausreichend hoch, um Nulldurchgänge der EMK zuverlässig zu detektieren.

Die Schaltungsanordnung gemäß der vorliegenden Erfindung bietet den Vorteil, dass die Erkennung während jeder PMW-Phase möglich ist, unabhängig davon, ob gerade eine aktive PMW-Phase eine floatende PMW-Phase oder eine aktive Freilaufphase vorliegt. Der Grund hierfür ist, dass die Vergleichsspannung stets korrekt vorliegt, um einen zuverlässigen Vergleich zu ermöglichen.

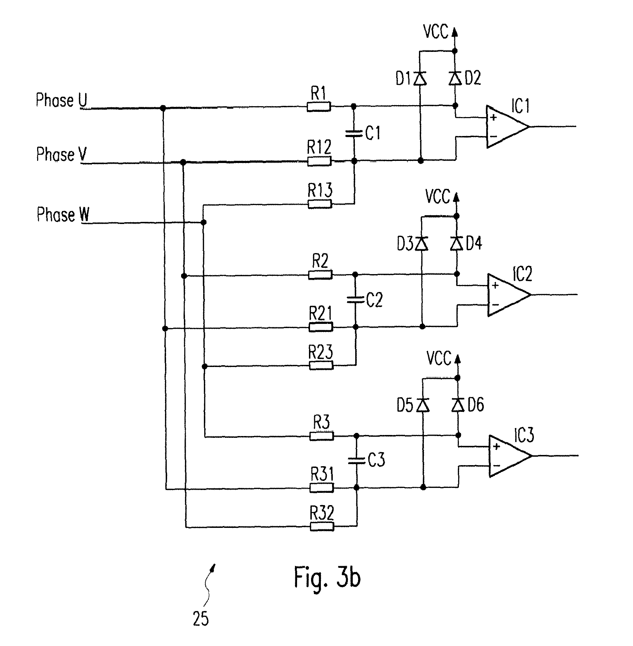

Eine Weiterbildung der Schaltungsanordnung von Figur 3a ist in Figur 3b dargestellt. Bei dieser Variante werden die Spannungen an den Eingängen der Komparatoren IC1, IC2, IC3 mittels Klemmdioden D1, D2, D3, D4, D5 und D6 auf zulässige Werte begrenzt. Hierdurch ist sichergestellt, dass die zu vergleichenden Spannungswerte in jedem Fall im Arbeitsbereich der Komparatoren liegen. Die Zuverlässigkeit der erfindungsgemäßen Schaltungsanordnung wir hierdurch nochmals verbessert.

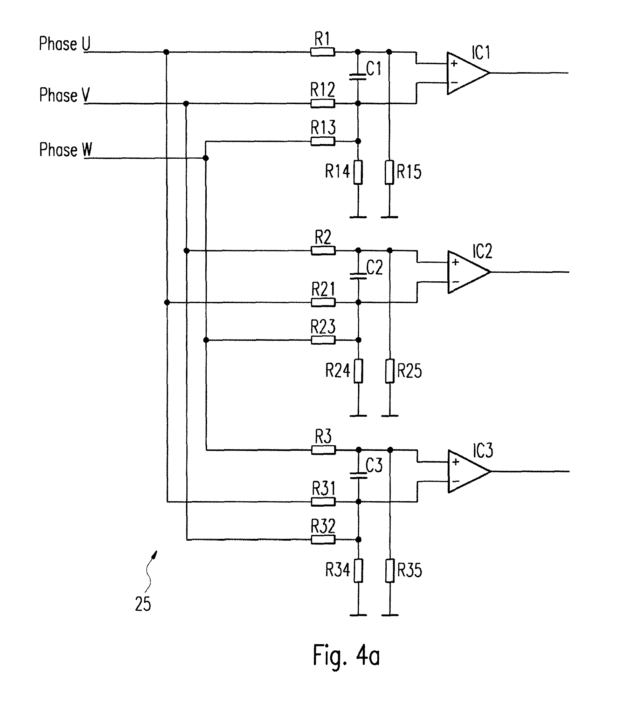

Eine andere Erweiterung des Schaltungskonzepts von Figur 3a ist in Figur 4a dargestellt. Auch bei diesem Ausführungsbeispiel werden die Eingangsspannungen für die Komparatoren IC1, IC2 beziehungsweise IC3 zunächst derart herabgesetzt, dass sie in jedem Fall im Arbeitsbereich der Komparatoren liegen. Dies erfolgt nun anstelle der in Figur 3b gezeigten Klemmdioden mittels Spannungsteilern, die durch Widerstände R14, R15, R24, R25, R34 und R35 gebildet werden, über welche jeweils der entsprechende Eingang des Komparators mit Masse verbunden ist. Für die Widerstände zur Überwachung der ersten Phase U gilt vorzugsweise folgende Beziehung:

$$R12 = R13$$

$$R1 = 1/2\,R12 = 1/2\,R13$$

$$R14 = R15$$

In entsprechender Weise sind auch die Widerstandswerte zur Überwachung der beiden weiteren Phasen V und W gewählt.

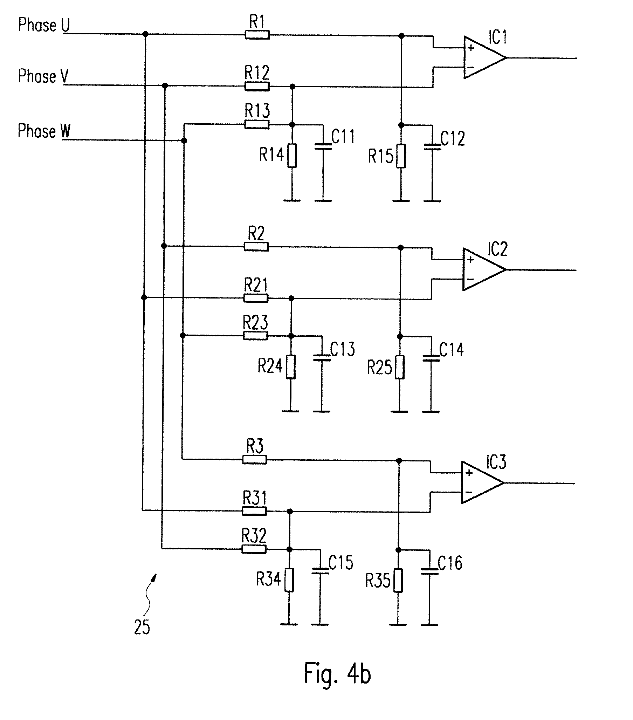

Alternativ zu den Kondensatoren C1, C2 und C3, welche die beiden Eingänge der Komparators IC1, IC2, IC3 überbrücken, könnten auch jeweils Kondensatoren gegen Masse geschaltet sein. Diese Variante ist in Figur 4b dargestellt. Hierbei kommen nunmehr sechs Kondensatoren C11, C12, C13, C14, C15 und C16 zum Einsatz, welche jeweils zu einem der Widerstände R14, R15, R24, R25, R34 und R35 zum Bilden der Spannungsteiler parallel geschaltet sind.

Insgesamt kann also festgestellt werden, dass durch die Verwendung einer neuartigen Vergleichsspannung die Nulldurchgänge für die EMK zuverlässiger detektiert werden können. Ein ordnungsgemäßer Betrieb des bürstenlosen Elektromotors wird hierdurch in jedem Fall sicher gestellt. Da ferner auch bei niedrigeren Drehzahlen eine zuverlässige Nulldurchgangserkennung erfolgt, können sowohl der Leistungsgrad des Motors als auch die Einsatzmöglichkeiten für den Elektromotor erweitert werden. Hierbei ist abschließend zu betonen, dass der zuvor beschriebene Anwendungsfall der Zahnmedizin bzw. Dentaltechnik zwar ein bevorzugtes Beispiel darstellt, dass allerdings die vorliegende Erfindung keineswegs auf diese Gebiete beschränkt ist. So wäre es beispielsweise ohne weiteres Möglich, eine entsprechende Schaltungsanordnung auch in Industriemotoren einzusetzen. Generell bringt die vorliegende Erfindung Vorteile mit sich, wenn zum Betrieb bürstenloser Elektromotoren Spannungsnullgänge der EMK zuverlässig erkannt werden sollen.

**Patentansprüche**

1. Verfahren zum Betreiben eines bürstenlosen Elektromotors (10), der beispielsweise zum Antreiben eines zahnärztlichen Behandlungsinstruments (100) vorgesehen ist, mit einem Permanentmagnetrotor (11) sowie einem Stator (14) mit drei elektrisch um 120° versetzten Wicklungen (15), wobei

   • die Nulldurchgänge einer durch die Drehung des Rotors (11) in die Statorwicklungen (15) induzierten Spannung ($U_{EMK}$) durch einen Vergleich der in einer Überwachungsphase an einer inaktiven Statorwicklung (15) anliegenden Spannung mit einer Vergleichsspannung ($U_{Vergleich}$) erfasst werden und
   • auf Basis der erfassten Nulldurchgänge die Drehzahl des Motors (10) und/oder ein geeigneter Kommutierungszeitpunkt für eine den Statorwicklungen (15) zugeführte Zwischenkreisspannung ($U_{ZK}$) ermittelt wird,

   **dadurch gekennzeichnet,**
   **dass** die Vergleichsspannung ($U_{vergleich}$) durch die in der Überwachungsphase an den beiden weiteren, aktiven Statorwicklungen (15) anliegenden Spannungen gebildet wird.

2. Verfahren nach Anspruch 1,
   **dadurch gekennzeichnet,**
   **dass** die Bildung der Vergleichsspannung

($U_{Vergleich}$) mit Hilfe eines Spannungsteilers erfolgt, der durch zwei Widerstände (R12, R13; R21, R23; R31, R32) gebildet ist, die an die beiden aktiven Statorwicklungen (15) angeschlossen sind.

3. Verfahren nach Anspruch 2,
**dadurch gekennzeichnet,**
**dass** die Widerstände (R12, R13; R21, R23; R31, R32) zum Bilden eines Spannungsteilers jeweils den gleichen Widerstandswert aufweisen.

4. Verfahren nach einem der vorherigen Ansprüche,
**dadurch gekennzeichnet,**
**dass** ein Nulldurchgang erkannt wird, sobald die Differenz zwischen der in die inaktive Statorwicklung (15) induzierten Spannung und der Vergleichsspannung einen vorgegebenen Hysteresewert überschreitet.

5. Verfahren nach einem der vorherigen Ansprüche,
**dadurch gekennzeichnet,**
**dass** der Vergleich zwischen der in die inaktive Statorwicklung (15) induzierten Spannung und der Vergleichsspannung durch einen Komparator (IC1, IC2, IC3) erfolgt.

6. Verfahren nach Anspruch 5,
**dadurch gekennzeichnet,**
**dass** die Eingänge des Komparators (IC1, IC2, IC3) durch einen Kondensator (C1, C2, C3) überbrückt werden.

7. Verfahren nach Anspruch 5 oder 6,
**dadurch gekennzeichnet,**
**dass** die dem Komparator (IC1, IC2, IC3) zugeführten Spannungen über Spannungsteiler oder mittels Klemmdioden auf dem Arbeitsbereich des Komparators (IC1, IC2, IC3) entsprechende Werte herabgesetzt werden.

8. Schaltungsanordnung (25) zum Erfassen der Nulldurchgänge einer in einem bürstenlosen Elektromotor (10) mit einem Permanentmagnetrotor (11) sowie einem Stator (14) mit drei elektrisch um 120° versetzten Wicklungen (15) in die Statorwicklungen (15) durch die Drehung des Rotors (11) induzierten Spannung ($U_{EMK}$),
mit einer Vergleichseinrichtung (IC1, IC2, IC3) zum Vergleichen einer in einer Überwachungsphase an einer inaktiven Statorwicklung (15) anliegenden Spannung mit einer Vergleichsspannung ($U_{Vergleich}$),
**dadurch gekennzeichnet,**
**dass** die Vergleichsspannung ($U_{Vergleich}$) aus den beiden in der Überwachungsphase an den beiden weiteren, aktiven Statorwicklungen (15) anliegenden Spannungen abgeleitet ist.

9. Schaltungsanordnung nach Anspruch 8,
**dadurch gekennzeichnet,**
**dass** diese zur Bildung der Vergleichsspannung ($U_{Vergleich}$) einen Spannungsteiler aufweist, der durch zwei Widerstände (R12, R13; R21, R23; R31, R32) gebildet ist, die an die beiden aktiven Statorwicklungen (15) angeschlossen sind.

10. Schaltungsanordnung nach Anspruch 9,
**dadurch gekennzeichnet,**
**dass** die Widerstände (R12, R13; R21, R23; R31, R32) zum Bilden eines Spannungsteilers jeweils den gleichen Widerstandswert aufweisen.

11. Schaltungsanordnung nach einem der Ansprüche 8 bis 10,
**dadurch gekennzeichnet,**
**dass** die Vergleichseinrichtung dazu ausgebildet ist, einen Nulldurchgang festzustellen, sobald die Differenz zwischen der in die inaktive Statorwicklung (15) induzierten Spannung und der Vergleichsspannung einen vorgegebenen Hysteresewert überschreitet.

12. Schaltungsanordnung nach einem der Ansprüche 8 bis 11,
**dadurch gekennzeichnet,**
**dass** die Vergleichseinrichtung durch einen Komparator (ICI, IC2, IC3) gebildet ist.

13. Schaltungsanordnung nach Anspruch 12,
**dadurch gekennzeichnet,**
**dass** die Eingänge des Komparators (ICI, IC2, IC3) durch einen Kondensator (C1, C2, C3) überbrückt sind.

14. Schaltungsanordnung nach Anspruch 12 oder 13,
**gekennzeichnet durch**
Spannungsteiler oder Klemmdioden zum Herabsetzen der dem Komparator (IC1, IC2, IC3) zugeführten Spannungen auf dem Arbeitsbereich des Komparators (IC1, IC2, IC3) entsprechende Werte.

15. Schaltungsanordnung nach einem der Ansprüche,
**dadurch gekennzeichnet,**
**dass** die Überwachung der Nulldurchgänge der in die der Statorwicklungen (15) induzierten Spannungen jeweils durch eine separate Vergleichseinrichtung erfolgt.

16. Bürstenloser Elektromotor, der beispielsweise zum Antreiben eines zahnärztlichen Behandlungsinstruments (100) oder eines dentaltechnischen Instruments vorgesehen ist, mit

    a) einem Permanentmagnetrotor (11),
    b) einem Stator (14) mit drei elektrisch um 120° versetzten Wicklungen (15),
    c) einer Schaltungsanordnung (25) zum Erfassen der Nulldurchgänge einer in die Statorwicklungen (15) durch die Drehung des Rotors (11) induzierten Spannung ($U_{EMK}$), sowie

d) einer Steuer- und Regeleinheit (23), welche auf Basis der erfassten Nulldurchgänge die Drehzahl des Motors (10) und/oder einen geeigneten Kommutierungszeitpunkt für eine den Statorwicklungen (15) zugeführte Zwischenkreisspannung ($U_{ZK}$) ermittelt,

**dadurch gekennzeichnet**,
das die Schaltungsanordnung (25) zum Erfassen der Nulldurchgänge gemäß einem der Ansprüche 8 bis 15 ausgebildet ist.

17. Zahnärztliches Behandlungsinstrument (100) oder dentaltechnisches Instrument mit einem Elektromotor (10) gemäß Anspruch 16.

Fig. 1

Fig. 2

Fig. 3a

Fig. 5
STAND DER TECHNIK

Fig. 3b

25

Fig. 4a

Fig. 4b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10023370 A1